# EUROPÄISCHE PATENTSCHRIFT

(11) **EP 2 845 696 B1**
(45) Veröffentlichungstag und Bekanntmachung des Hinweises auf die Patenterteilung: **17.05.2017**
(21) Anmeldenummer: 13183744.5
(22) Anmeldetag: 10.09.2013
(51) Int. Cl.: B25J 9/16

(54) **Bearbeitungsmaschine mit redundanten Achsen und Auflösung der Redundanz in Echtzeit**
Processing machine with redundant axes and resolution of the redundancy in real time
Machine d'usinage à axes redondants et résolution de la redondance en temps réel

(43) Veröffentlichungstag der Anmeldung: 11.03.2015
(73) Patentinhaber: Siemens Aktiengesellschaft, 80333 München (DE)
(72) Erfinder: Hamm, Carsten, 91058 Erlangen (DE); Tauchmann, Sven, 09119 Chemnitz (DE)

(56) Entgegenhaltungen:
- EP-A2- 1 529 605
- US-A1- 2003 171 847

## Beschreibung

Die vorliegende Erfindung betrifft ein Steuerverfahren für eine Bearbeitungsmaschine,
- wobei eine numerische Steuerung ein Anwenderprogramm entgegen nimmt, durch das in einer Anzahl von Freiheitsgraden eine Sequenz von von einem Endeffektor anzufahrenden Bahnpunkten festgelegt ist,
- wobei die numerische Steuerung für die Bahnpunkte jeweils eine Steuersignalgruppe ermittelt,
- wobei die jeweilige Steuersignalgruppe für eine Anzahl von lagegeregelten Achsen der Bearbeitungsmaschine jeweils deren Lagesollwert enthält,
- wobei die numerische Steuerung die ermittelten Lagesollwerte an die Achsen ausgibt und dadurch den Endeffektor bewegt,
- wobei die numerische Steuerung die Steuersignalgruppen derart ermittelt, dass der Endeffektor die anzufahrenden Bahnpunkte zumindest näherungsweise anfährt,
- wobei die Anzahl von Freiheitsgraden kleiner als die Anzahl von lagegeregelten Achsen ist,
- wobei die numerische Steuerung die Lagesollwerte der Steuersignalgruppen durch Minimieren einer jeweiligen Zielfunktion ermittelt,
- wobei in die Zielfunktion, die während des Anfahrens eines der Bahnpunkte minimiert wird, zumindest die Lagesollwerte für einen zu diesem Zeitpunkt erst zukünftig anzufahrenden Bahnpunkt eingehen.

Die vorliegende Erfindung betrifft weiterhin ein Systemprogramm, das Maschinencode umfasst, der von einer numerischen Steuerung für eine Bearbeitungsmaschine abarbeitbar ist, wobei die Abarbeitung des Maschinencodes - verkürzt gesprochen
- bewirkt, dass die numerische Steuerung ein derartiges Steuerverfahren ausführt.

Die vorliegende Erfindung betrifft weiterhin eine numerische Steuerung, wobei die numerische Steuerung mit einem derartigen Systemprogramm programmiert ist.

Die vorliegende Erfindung betrifft weiterhin eine Bearbeitungsmaschine mit einem mittels einer Anzahl von lagegeregelten Achsen bewegten Endeffektor und einer derartigen numerischen Steuerung.

Ein derartiges Steuerverfahren, ein derartiges Systemprogramm, die zugehörige numerische Steuerung und die zugehörige Bearbeitungsmaschine sind beispielsweise aus der AT 401 746 B bekannt. Bei diesem Stand der Technik wird eine vom Manipulator eines Roboters abzufahrende Bahn in eine Vielzahl von zeitlich äquidistanten Bahnpunkten unterteilt. Für jeden Bahnpunkt bzw. hiermit korrespondierend für jeden Zeitpunkt wird die jeweilige Roboterkonfiguration (d.h. die relevanten Lagesollwerte aller lagegeregelten Achsen) ermittelt und in eine Tabelle eingetragen. Nach dem Vervollständigen der Tabelle, also erst nach dem Ermitteln der Roboterkonfiguration für alle Bahnpunkte, werden die lagegeregelten Achsen angesteuert.

Aus der US 4 999 553 A ist ein ähnliches Steuerverfahren bekannt. Bei diesen Steuerverfahren wird eine Anzahl zusätzlicher kinematischer Bedingungen definiert, um die anderenfalls gegebenen Redundanzen aufzulösen. Aufgrund der zusätzlichen kinematischen Bedingungen kann für jeden Bahnpunkt die Roboterkonfiguration so ermittelt werden, als ob der Roboter nicht redundant wäre. Dieses Steuerverfahren ist echtzeitfähig.

Aus dem Fachaufsatz "Solving the Singularity Problem of nonredundant Manipulators by Constraint Optimization" von Günter Schreiber et al., erschienen in den Proceedings of the 1999 IEEE/RSJ International Conference on Intelligent Robots and Systems, Seiten 1482 bis 1488, ist bekannt, den insgesamt sechsdimensionalen Raumvektor (drei translatorische und drei rotatorische Vektorkomponenten) in zwei Teilvektoren aufzuspalten. Die Aufspaltung kann nach Bedarf vorgenommen werden. Der eine Teilvektor muss exakt erfüllt werden, der andere Teilvektor muss nur in etwa erfüllt werden. Zur Bestimmung des anderen Teilvektors werden im Rahmen eines Minimierungsproblems lineare Randbedingungen berücksichtigt. Ferner soll bezüglich des anderen Teilvektors die Abweichung der tatsächlichen Bahn von der eigentlich gewünschten Bahn minimiert werden.

Aus der EP 1 591 209 A2 ist ein Verfahren zum Steuern einer Maschine, insbesondere eines Roboters bekannt. Bei diesem Verfahren weist die Maschine bzw. der Roboter als solcher keine redundanten Freiheitsgrade auf. Aufgrund des auszuführenden Bearbeitungsvorgangs ergeben sich jedoch für den jeweiligen Bearbeitungsprozess spezifische Freiheitsgrade. Es wird eine Gütefunktion aufgestellt, die den Abstand kinematischer Zwangslagen beinhaltet. Die Achsstellungen werden unter Berücksichtigung der für den Bearbeitungsprozess spezifischen Freiheitsgrade derart bestimmt, dass der Abstand der Achsstellungen von den Zwangslagen der Maschine möglichst groß ist.

Aus der EP 0 465 661 A1 ist ein Gelenkroboter mit redundanten Achsen bekannt. Insgesamt können bis zu zwölf Achsen vorhanden sein. Die Achsen des Roboters werden in zwei Gruppen aufgeteilt, wobei jede Gruppe maximal sechs Achsen umfasst. Die Achsen der einen Gruppe werden als Basisachsen betrachtet, deren Werte eindeutig bestimmt werden. Durch Interpolation ergeben sich dann die Werte der Achsen der anderen Gruppe.

Redundante Roboter (oder ähnliche Bearbeitungsmaschinen mit Redundanzen) sind bekannt. "Redundant" bedeutet, dass die Maschinenstruktur mehr Freiheitsgrade aufweist, als für die eigentliche Bewegungsaufgabe notwendig sind. Im einfachsten Fall erfolgt im Falle einer derartigen Redundanz beim Erstellen des Anwenderprogramms vom Anwender eine explizite Programmierung aller lagegeregelten Achsen, so dass die Redundanz praktisch nicht genutzt wird. Es ist jedoch - siehe beispielsweise die eingangs genannte AT 401 746 B und auch die eingangs genannte US 4 999 553 A - ebenfalls bereits bekannt, nur die eigentliche Steueraufgabe (d.h. die vom Endeffektor anzufahrenden Bahnpunkte) zu programmieren und zusätzliche Randbedingungen vorzugeben, welche bei der Ermittlung der Lagesollwerte eingehalten werden sollen. In diesem Fall ermittelt die numerische Steuerung die Lagesollwerte der lagegeregelten Achsen selbsttätig anhand eines vorgegebenen Kriteriums.

Insbesondere die Vorgehensweise der AT 401 746 B arbeitet bereits recht zuverlässig. Sie weist jedoch den Nachteil auf, dass stets vorab für die Gesamtheit der anzufahrenden Bahnpunkte jeweils die zugehörige Steuersignalgruppe ermittelt werden muss. Dies ist insbesondere bei langen Sequenzen von Bahnpunkten zeitaufwändig.

Die Aufgabe der vorliegenden Erfindung besteht darin, Möglichkeiten zu schaffen, mittels derer unter Beibehaltung der Vorteile der Vorgehensweise der AT 401 746 B deren Nachteile vermieden werden können.

Die Aufgabe wird durch ein Steuerverfahren mit den Merkmalen des Anspruchs 1 gelöst. Vorteilhafte Ausgestaltungen des erfindungsgemäßen Steuerverfahrens sind Gegenstand der abhängigen Ansprüche 2 bis 10.

Erfindungsgemäß wird ein Steuerverfahren der eingangs genannten Art dadurch ausgestaltet,
- dass die numerische Steuerung die Steuersignalgruppen sukzessiv während des Ansteuerns der lagegeregelten Achsen ermittelt und
- dass zwischen dem momentan angefahrenen Bahnpunkt und dem zukünftig anzufahrenden Bahnpunkt mindestens ein weiterer Bahnpunkt der Sequenz liegt.

Durch diese Vorgehensweise kann einerseits die Ermittlung der Lagesollwerte in vorteilhafter Weise weiterhin durch Minimieren einer Zielfunktion erfolgen. Es ist jedoch möglich, mit der Ansteuerung der lagegeregelten Achsen und hiermit korrespondierenden mit dem Verfahren des Endeffektors zu beginnen, noch bevor die Lagesollwerte für alle Bahnpunkte ermittelt sind.

Es ist möglich, dass die numerische Steuerung durch das Minimieren der jeweiligen Zielfunktion jeweils die Lagesollwerte für den als nächstes anzufahrenden Bahnpunkt ermittelt. In diesem Fall kann die Ermittlung der Lagesollwerte analog zu einer prädiktiven Regelung erfolgen. Der Prädiktionshorizont kann in diesem Fall nach Bedarf bestimmt sein, beträgt aber - selbstverständlich - mindestens einen Bahnpunkt.

Falls der Prädiktionshorizont mehr als einen Bahnpunkt beträgt, gehen in die jeweilige Zielfunktion vorzugsweise auch die Lagesollwerte derjenigen Bahnpunkte ein, die innerhalb der Sequenz von Bahnpunkten zwischen dem zukünftig anzufahrenden Bahnpunkt und dem als nächstes anzufahrenden Bahnpunkt liegen.

Alternativ ist es möglich, dass die numerische Steuerung durch das Minimieren der jeweiligen Zielfunktion jeweils die Lagesollwerte für den zukünftig anzufahrenden Bahnpunkt ermittelt. In diesem Fall ist während der Ansteuerung der lagegeregelten Achsen zu jedem Zeitpunkt für den jeweiligen Prädiktionshorizont der Verlauf der Lagesollwerte der lagegeregelten Achsen bekannt.

Es ist möglich, dass die numerische Steuerung die Lagesollwerte einzeln für den jeweiligen Bahnpunkt ermittelt. In manchen Fällen ist es jedoch möglich, die Lagesollwerte gruppenweise zu ermitteln. In diesem Fall kann das Steuerverfahren also derart ausgestaltet sein,
- dass die numerische Steuerung durch das Minimieren der jeweiligen Zielfunktion die Lagesollwerte für mehrere Bahnpunkte ermittelt,
- dass die Bahnpunkte, deren Lagesollwerte durch Minimieren der jeweiligen Zielfunktion ermittelt werden, innerhalb der Sequenz von anzufahrenden Bahnpunkten eine in sich zusammenhängende Gruppe bilden und
- dass die in sich zusammenhängende Gruppe den zukünftig anzufahrenden Bahnpunkt enthält.

Diese Vorgehensweise kann unter Umständen insbesondere sehr recheneffizient sein.

Vorzugsweise weisen die Bahnpunkte definierte Abstände voneinander auf. Die Abstände können nach Bedarf auf die Zeit oder auf die durch die Sequenz von Bahnpunkten definierte Bahn bezogen sein.

In einer bevorzugten Ausgestaltung des Steuerverfahrens gehen in die jeweilige Zielfunktion auch zeitliche Ableitungen der in die jeweilige Zielfunktion eingehenden Lagesollwerte ein. Dadurch können insbesondere übermäßige Geschwindigkeiten, Beschleunigungen und Rucke vermieden werden.

Die Zielfunktion kann beispielsweise derart bestimmt sein, dass sie die Steifigkeit des Endeffektors berücksichtigt. Diese Vorgehensweise führt insbesondere bei Belastungen des Endeffektors zu einer hohen Bahntreue.

Die Zielfunktion kann weiterhin derart bestimmt sein, dass in ihr Singularitäten und Softwarelimits berücksichtigt werden. Dadurch können insbesondere Zweideutigkeiten und Kollisionen vermieden werden.

In einer besonders bevorzugten Ausgestaltung des Steuerverfahrens gehen in die Zielfunktion Abweichungen einer sich aufgrund der Lagesollwerte ergebenden Istbahn von einer durch die Sequenz von Bahnpunkten definierten Sollbahn ein. Dadurch können wichtige Sekundärkriterien (beispielsweise die Steifigkeit) bei tolerierbaren Abweichungen von der Sollbahn optimiert werden.

Die Aufgabe wird weiterhin durch ein Systemprogramm mit den Merkmalen des Anspruchs 11 gelöst. Vorteilhafte Ausgestaltungen des erfindungsgemäßen Systemprogramms sind Gegenstand der abhängigen Ansprüche 12 und 13.

Erfindungsgemäß wird ein Systemprogramm der eingangs genannten Art dadurch ausgestaltet, dass durch seine Ausführung - verkürzt gesprochen - ein erfindungsgemäßes Steuerverfahren realisiert wird. Das Systemprogramm kann insbesondere aufgrund des Abarbeitens des Maschinencodes auch die vorteilhaften Ausgestaltungen des erfindungsgemäßen Steuerverfahrens realisieren. Weiterhin kann es auf einem Datenträger in maschinenlesbarer Form - beispielsweise in elektronischer Form - gespeichert sein.

Die Aufgabe wird weiterhin durch eine numerische Steuerung mit den Merkmalen des Anspruchs 14 gelöst. Erfindungsgemäß ist eine numerische Steuerung mit einem erfindungsgemäßen Systemprogramm programmiert.

Die Aufgabe wird weiterhin durch eine Bearbeitungsmaschine mit den Merkmalen des Anspruchs 15 gelöst. Erfindungsgemäß ist die numerische Steuerung der Bearbeitungsmaschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Bearbeitungsmaschine von der Seite,
- FIG 2: die Bearbeitungsmaschine von FIG 1 von oben,
- FIG 3 und 4: je eine Sollbahn,
- FIG 5 und 6: Ablaufdiagramme und
- FIG 7 und 8: Zielfunktionen.

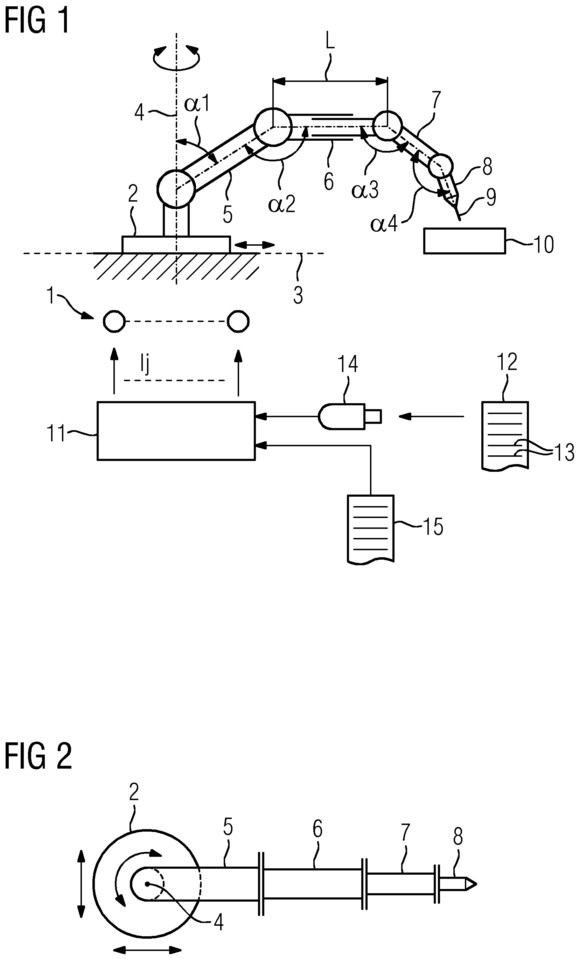

Eine Bearbeitungsmaschine weist üblicherweise eine Anzahl von lagegeregelten Achsen 1 auf. Rein beispielhaft ist in den Darstellungen der FIG 1 und 2 eine Bearbeitungsmaschine mit insgesamt acht lagegeregelten Achsen 1 dargestellt. Insbesondere können bei der Bearbeitungsmaschine der FIG 1 und 2 beispielsweise folgende Achsen 1 lagegeregelt werden:
- Zwei Achsen 1, mittels welcher ein Basiselement 2 translatorisch in zwei linear voneinander unabhängigen - meist zueinander orthogonalen - Richtungen in einer horizontalen Ebene 3 verfahren werden kann.
- Eine Achse 1, mittels welcher das Basiselement 2 um eine vertikale Achse 4, also einer zu der horizontalen Ebene 3 orthogonalen Achse 4, gedreht werden kann.
- Eine Achse 1, mittels welcher ein Winkel α1 eines Oberarmgliedes 5 relativ zur vertikalen Achse 4 eingestellt werden kann.
- Eine Achse 1, mittels welcher ein Winkel α2 eines Mittelarmgliedes 6 relativ zu einer Längserstreckung des Oberarmgliedes 5 eingestellt werden kann.
- Eine Achse 1, mittels welcher eine Länge L des Mittelarmgliedes 6 eingestellt werden kann.
- Eine Achse 1, mittels welcher ein Winkel α3 eines Unterarmgliedes 7 relativ zu einer Längserstreckung des Mittelarmgliedes 6 eingestellt werden kann.
- Eine Achse 1, mittels welcher ein Winkel α4 eines Endeffektors 8 relativ zu einer Längserstreckung des Unterarmgliedes 7 eingestellt werden kann.

Im Endergebnis kann durch entsprechende lagegeregelte Ansteuerung der Achsen 1 somit der Endeffektor 8 bewegt werden und die Lage des Endeffektors 8 in einer Anzahl von Freiheitsgraden geregelt eingestellt werden.

Gemäß dem Beispiel der FIG 1 und 2 weist die Bearbeitungsmaschine insgesamt acht lagegeregelte Achsen 1 auf. Die konkrete Anzahl an lagegeregelten Achsen 1 ist jedoch von untergeordneter Bedeutung. Entscheidend ist nur, dass eine gewisse Anzahl an lagegeregelten Achsen 1 vorhanden ist.

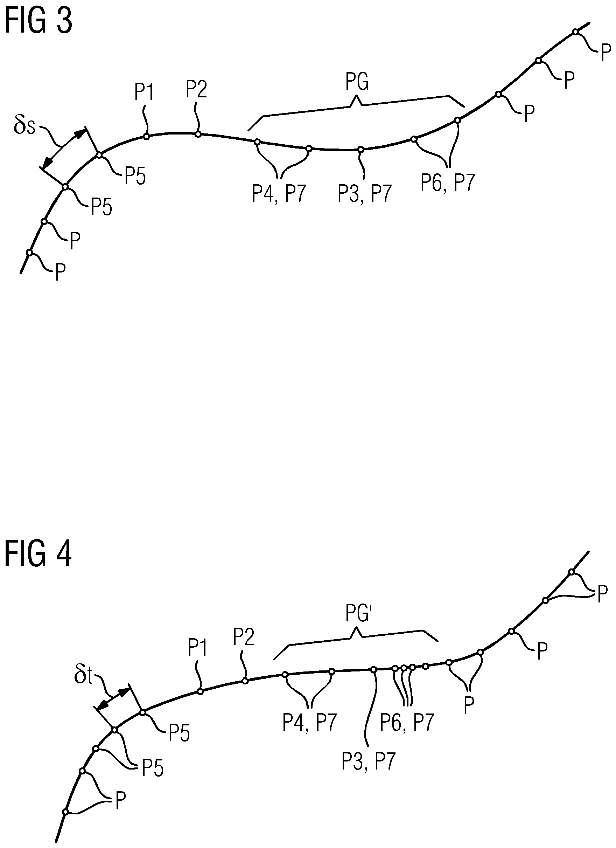

Der Endeffektor 8 trägt und hält in der Regel ein Werkzeug 9, mittels dessen ein Werkstück 10 bearbeitet werden soll. Mittels der lagegeregelten Achsen 1 soll eine Lage des Werkzeugs 9 - bzw. hiermit korrespondierend des Endeffektors 8 - entsprechend einer Sequenz von Bahnpunkten P (siehe FIG 3 und 4) eingestellt werden. Für jeden Bahnpunkt P soll also der Endeffektor 8 in einer Anzahl von (translatorischen und/oder rotatorischen) Freiheitsgraden lagegeregelt positioniert werden. Wenn beispielsweise das Werkzeug 9 ein rotierendes Werkzeug ist (beispielsweise ein Bohrer oder ein Fräskopf) oder einen Strahl emittiert (beispielsweise einen Wasser- oder Laserstrahl), kann es erforderlich sein, für jeden Bahnpunkt P bis zu drei translatorische und bis zu zwei rotatorische Freiheitsgrade fi festzulegen.

Die Bahnpunkte werden nachfolgend, soweit allgemeinen von den Bahnpunkten die Rede ist, mit dem Bezugszeichen P bezeichnet. Soweit zwischen einzelnen Bahnpunkten P unterschieden werden muss, wird das Bezugszeichen P nach Bedarf durch eine Ziffer ergänzt.

Analog zur Anzahl an lagegeregelten Achsen 1 ist die konkrete Anzahl an lagegeregelten Freiheitsgraden fi von untergeordneter Bedeutung. Entscheidend ist nur, dass die Bahnpunkte P in einer gewissen Anzahl an Freiheitsgraden fi definiert sind und dass diese Anzahl kleiner als die Anzahl an lagegeregelten Achsen 1 ist, so dass eine gewisse Redundanz besteht.

Gemäß FIG 1 weist die Bearbeitungsmaschine eine numerische Steuerung 11 auf. Die numerische Steuerung 11 ist als softwareprogrammierbare Einrichtung ausgebildet. Die Funktion und Wirkungsweise der numerischen Steuerung 11 wird daher durch ein Systemprogramm 12 festgelegt, mit dem die numerische Steuerung 11 programmiert ist. Das Systemprogramm 12 umfasst Maschinencode 13, der von der numerischen Steuerung abarbeitbar ist. Der Maschinencode 13 kann von der numerischen Steuerung 11 direkt und unmittelbar abarbeitbar sein. In diesem Fall besteht der Maschinencode 13 direkt aus Maschinenbefehlen. Alternativ kann es sich bei dem Maschinencode 13 um eine mnemonische Notation handeln, die von der numerischen Steuerung 11 durch Interpretation in Maschinenbefehle umgesetzt wird. Alternativ oder zusätzlich kann eine vorherige Verarbeitung des Maschinencodes 13 erforderlich sein, beispielsweise eine Entschlüsselung. Unabhängig davon, welche Vorgehensweise ergriffen wird, kann die numerische Steuerung 11 jedoch den Maschinencode 13 ausführen, ohne dass ein Mensch intellektuell tätig werden muss.

Das Zuführen des Systemprogramms 12 zur numerischen Steuerung 11 kann auf beliebige Art und Weise erfolgen. Beispielsweise kann das Systemprogramm 12 der numerischen Steuerung 11 über eine Rechner-Rechner-Anbindung über ein Datennetzwerk zugeführt werden. Alternativ ist es möglich, dass das Systemprogramm 12 auf einem Datenträger 14 (rein beispielhaft ist in FIG 1 ein USB-Memorystick dargestellt) in maschinenlesbarer Form gespeichert wird und der numerischen Steuerung 11 über den Datenträger 14 zugeführt wird. Das Systemprogramm 12 ist in der Regel in der numerischen Steuerung 11 fest hinterlegt. Es kann von einem (in den FIG nicht dargestellten) Anwender in der Regel nicht geändert werden.

Die Abarbeitung des Maschinencodes 13 durch die numerische Steuerung 11 bewirkt, dass die numerische Steuerung 11 ein Steuerverfahren ausführt, das nachstehend näher erläutert wird.

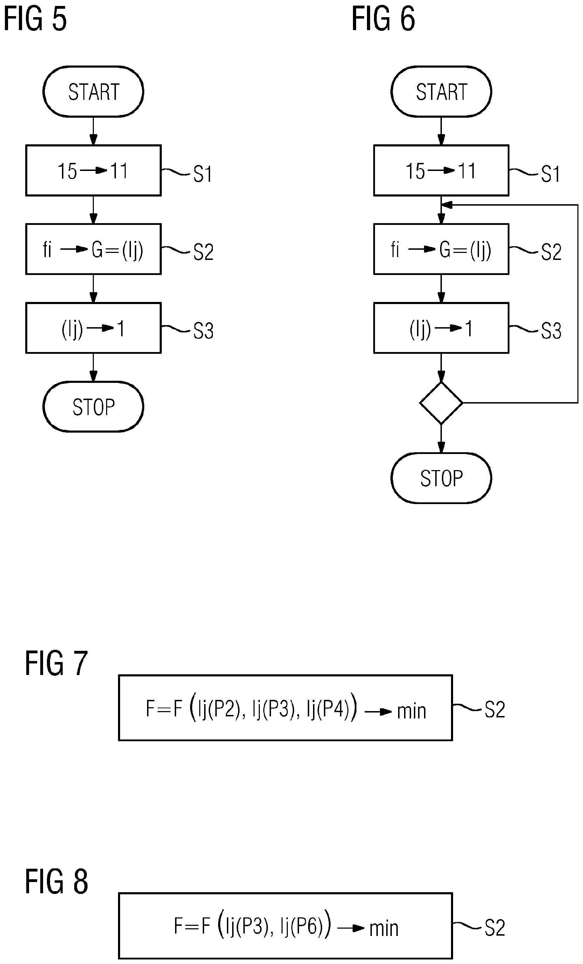

Zunächst nimmt die numerische Steuerung 11 gemäß FIG 5 in einem Schritt S1 ein Anwenderprogramm 15 (siehe FIG 1) entgegen. Das Anwenderprogramm 15 kann der numerischen Steuerung 11 auf die gleiche Art und Weise wie das Systemprogramm 12 oder auf eine andere Art und Weise zugeführt werden. Das Anwenderprogramm 15 kann der numerischen Steuerung 11 in der Regel von dem Anwender frei vorgegeben werden.

Das Anwenderprogramm 15 legt die Sequenz von Bahnpunkten P fest. Insbesondere ist für jeden Bahnpunkt P die vom Endeffektor 8 jeweils anzufahrende Lage in den entsprechenden Freiheitsgraden fi bestimmt. Hingegen ist durch das Anwenderprogramm 15 noch nicht eine korrespondierende Sequenz von Steuersignalgruppen G bestimmt. Die Steuersignalgruppen G werden vielmehr erst in einem Schritt S2 von der numerischen Steuerung 11 ermittelt. Jede Steuersignalgruppe G enthält gemäß FIG 5 für jede lagegeregelte Achse 1 jeweils deren zugehörigen, für diesen Bahnpunkt P gültigen Lagesollwert lj. Die Ermittlung erfolgt - selbstverständlich - derart, dass der Endeffektor 8 die anzufahrenden Bahnpunkte P exakt oder zumindest näherungsweise anfährt. Sodann werden die ermittelten Lagesollwerte lj - die in ihrer Gesamtheit die entsprechende Steuersignalgruppe G bilden - von der numerischen Steuerung 11 in einem Schritt S3 an die Achsen 1 ausgegeben und dadurch der Endeffektor 8 bewegt.

Die vorliegende Erfindung betrifft die genaue Art und Weise, auf welche die Ermittlung der Steuersignalgruppen G erfolgt.

Ein wesentlicher Aspekt der vorliegenden Erfindung besteht darin, dass die numerische Steuerung 11 die Steuersignalgruppen G sukzessive während des Ansteuerns der lagegeregelten Achsen 1 ermittelt. Genau genommen ist die Darstellung in FIG 5 daher nicht ganz korrekt, weil gemäß der Darstellung in FIG 5 zuerst die Ermittlung der Lagesollwerte lj und erst danach die Ansteuerung der lagegeregelten Achsen 1 erfolgt. Tatsächlich wird jedoch gemäß FIG 6 zur Implementierung der Schritte S2 und S3 von FIG 5 eine Schleife wiederholt ausgeführt, wobei im Rahmen der Abarbeitung dieser Schleife zum einen im Schritt S2 für mindestens einen Bahnpunkt P die zugehörige Steuersignalgruppe G ermittelt wird und zum anderen im Schritt S3 für einen Bahnpunkt P die zugehörige Steuersignalgruppe G an die lagegeregelten Achsen 1 ausgegeben wird.

Ein weiterer wesentlicher Aspekt der vorliegenden Erfindung besteht darin, dass die numerische Steuerung 11, wie im Schritt S2 dargestellt, für die Ermittlung der jeweiligen Steuersignalgruppe G (= der Lagesollwerte lj dieser Steuersignalgruppe G) eine jeweilige Zielfunktion F aufstellt und - beispielsweise durch Variieren der Lagesollwerte lj - ein Minimum dieser Zielfunktion F ermittelt. Für mindestens einen Bahnpunkt P sind die Lagesollwerte lj, für welche dieses Minimum erreicht wird, die endgültigen Lagesollwerte lj der jeweiligen Steuersignalgruppe G.

Die Zielfunktion F selbst kann nach Bedarf bestimmt sein. Beispielsweise ist es möglich, dass in die Zielfunktion F zusätzlich zu den Lagesollwerten lj der berücksichtigten Bahnpunkte P auch zeitliche Ableitungen der in die jeweilige Zielfunktion F eingehenden Lagesollwerte lj eingehen, also insbesondere Geschwindigkeiten, Beschleunigungen und/oder Rucke. Auch andere Bedingungen sind nach Bedarf berücksichtigbar. Beispielsweise kann die Zielfunktion F derart bestimmt sein, dass sie die Steifigkeit des Endeffektors 8 berücksichtigt, also dessen Nachgiebigkeit bei Einwirken äußerer, nicht von den Achsen 1 aufgebrachter Kräfte. Es ist weiterhin möglich, in der Zielfunktion F Singularitäten und Softwarelimits zu berücksichtigen. Durch die Berücksichtigung von Singularitäten kann beispielsweise die Eindeutigkeit der aufgefundenen Lagesollwerte lj gewährleistet werden. Durch die Berücksichtigung von Softwarelimits können - zumindest innerhalb gewisser Grenzen - Kollisionen erkannt und vermieden werden.

Im einfachsten Fall wird, so wie in der eingangs erwähnten AT 401 746 B, eine Kombination von Lagesollwerten lj ermittelt, für welche der Endeffektor 8 exakt zu der Lage (Position und/oder Orientierung) verfahren wird, welche durch den entsprechenden Bahnpunkt P vorgegeben ist. Alternativ ist es möglich, dass in die Zielfunktion F Abweichungen einer sich aufgrund der Lagesollwerte lj ergebenden Istbahn von einer durch die Sequenz von Bahnpunkten P definierten Sollbahn eingehen. Abweichungen werden also durch höhere Werte der Zielfunktion F "bestraft", sind jedoch nicht kategorisch ausgeschlossen. In diesem Fall kann beispielsweise eine geringe Abweichung der Istbahn von der Sollbahn zugelassen werden, wenn dadurch eine hinreichend große Kompensation durch Verbesserung eines anderen zu erreichenden Kriteriums (beispielsweise der Steifigkeit) erzielt wird. Soweit erforderlich, kann das Ausmaß einer möglichen Abweichung der Istbahn von der Sollbahn durch eine einzuhaltende Ungleichheitsbedingung begrenzt werden, also durch die Vorgabe, dass die maximal zulässige Abweichung einen vorbestimmten Grenzwert nicht überschreiten darf.

Es ist möglich, dass die im Rahmen des Schrittes S2 ermittelten Lagesollwerte lj diejenigen Lagesollwerte lj sind, welche im unmittelbar danach ausgeführten Schritt S3 an die lagegeregelten Achsen 1 ausgegeben werden. Es ist alternativ möglich, dass die im Rahmen des Schrittes S2 ermittelten Lagesollwerte lj erst zu einem späteren Zeitpunkt an die lagegeregelten Achsen 1 ausgegeben werden. Beides wird später näher dargelegt werden. Unabhängig davon, ob die im Rahmen des Schrittes S2 ermittelten Lagesollwerte lj im unmittelbar danach ausgeführten Schritt S3 oder erst zu einem späteren Zeitpunkt an die lagegeregelten Achsen 1 ausgegeben werden, gehen in die Ermittlung der Lagesollwerte lj der jeweiligen Steuersignalgruppe G - also in die Ermittlung der Lagesollwerte lj derjenigen Steuersignalgruppe G, welche bei der momentanen Abarbeitung der in FIG 6 dargestellten Schleife erfolgt - zumindest die Lagesollwerte lj für einen zu diesem Zeitpunkt erst zukünftig anzufahrenden Bahnpunkt P ein.

Bezogen auf eine einzelne Abarbeitung der Schleife von FIG 6 sind also der zukünftig anzufahrende Bahnpunkt P, dessen Lagesollwerte lj im Schritt S2 berücksichtigt werden, und der im Schritt S3 angefahrene Bahnpunkt P voneinander verschiedene Bahnpunkte P. Zwischen dem momentan angefahrenen Bahnpunkt P - d.h. demjenigen Bahnpunkt P, welcher vor der Abarbeitung der in FIG 6 dargestellten Schleife angefahren ist - und dem zukünftig anzufahrenden Bahnpunkt P - d.h. demjenigen Bahnpunkt P, für welchen im Schritt S2 dessen Lagesollwerte lj berücksichtigt werden - liegt daher mindestens ein weiterer Bahnpunkt P der Sequenz, nämlich derjenige Bahnpunkt P, der im Schritt S3 angefahren wird. Die entsprechenden Bahnpunkte sind - rein exemplarisch - in den FIG 3 und 4 dargestellt und mit den Bezugszeichen P1, P2 und P3 versehen. P1 bezeichnet den momentan angefahrenen Bahnpunkt, d.h. denjenigen Bahnpunkt, welcher vor der jeweiligen Abarbeitung der in FIG 6 dargestellten Schleife angefahren ist. P3 bezeichnet den zukünftig anzufahrenden Bahnpunkt - d.h. denjenigen Bahnpunkt, dessen Lagesollwerte lj im Schritt S2 berücksichtigt werden. P2 bezeichnet den dazwischenliegenden Bahnpunkt, der im Schritt S3 angefahren wird.

Wie bereits erwähnt, ist es möglich, dass die im Rahmen des Schrittes S2 ermittelten Lagesollwerte lj diejenigen Lagesollwerte lj sind, welche im unmittelbar danach ausgeführten Schritt S3 an die lagegeregelten Achsen 1 ausgegeben werden. In diesem Fall ermittelt die numerische Steuerung 11 also durch das Minimieren der jeweiligen Zielfunktion F jeweils die Lagesollwerte lj für den als nächstes anzufahrenden Bahnpunkt P2. In diesem Fall kann die numerische Steuerung 11 entsprechend der Darstellung in FIG 7 beispielsweise eine Zielfunktion F aufstellen, in welche zum einen (selbstverständlich) die Lagesollwerte lj für den Bahnpunkt P2 und zusätzlich die Lagesollwerte lj für den Bahnpunkt P3 eingehen. Falls innerhalb der Sequenz von Bahnpunkten P zwischen dem Bahnpunkt P2 und dem Bahnpunkt P3 weitere Bahnpunkte liegen - in den FIG 3 und 4 mit P4 bezeichnet - gehen in die Zielfunktion F entsprechend der Darstellung in FIG 7 vorzugsweise zusätzlich auch deren Lagesollwerte lj ein. Mittels dieser Vorgehensweise können beispielsweise analog zu einer prädiktiven Regelung sich erst zukünftig einstellende Sachverhalte bei der Ermittlung der als nächstes auszugebenden Lagesollwerte lj berücksichtigt werden. Unter Umständen kann es sinnvoll sein, zusätzlich zu den Bahnpunkten P2, P3, P4 auch in der Vergangenheit liegende Bahnpunkte - in den FIG 3 und 4 mit P5 bezeichnet - mit zu berücksichtigen.

Wie ebenfalls bereits erwähnt, ist es alternativ möglich, dass die im Rahmen des Schrittes S2 ermittelten Lagesollwerte lj erst zu einem späteren Zeitpunkt an die lagegeregelten Achsen 1 ausgegeben werden. In diesem Fall kann die numerische Steuerung 11 beispielsweise eine Art Schieberegister oder einen anderen Puffer- oder Umlaufspeicher aufweisen, so dass stets mit einem gewissen Vorlauf die Lagesollwerte lj für den zukünftig anzufahrenden Bahnpunkt P3 ermittelt werden. In diesem Fall ist es entsprechend der Darstellung in FIG 8 möglich, dass in die jeweilige Zielfunktion F ausschließlich die Lagesollwerte lj für den zukünftig anzufahrenden Bahnpunkt P3 eingehen. Alternativ ist es möglich, auch für diese Ermittlung die Lagesollwerte lj weiterer Bahnpunkte P zu berücksichtigen. Beispielsweise können - siehe die FIG 3 und 4 - entsprechend der Darstellung in FIG 8 Bahnpunkte P6 berücksichtigt werden, die - bezogen auf den Bahnpunkt P3 - noch weiter in der Zukunft liegen.

Die einzelnen Bahnpunkte P weisen in der Regel einen definierten (meist konstanten) Abstand δs, δt voneinander auf. Es ist möglich, dass der Abstand δs gemäß der Darstellung in FIG 3 auf die Länge des Bahnabschnitts bezogen ist, der zwischen benachbarten Bahnpunkten P liegt. Alternativ ist es möglich, dass der Abstand δt gemäß der Darstellung in FIG 4 auf die Zeit bezogen ist.

In der Regel wird die numerische Steuerung 11 die Lagesollwerte lj der einzelnen Steuersignalgruppen G einzeln ermitteln. In der Regel wird die numerische Steuerung 11 also für jeden Bahnpunkt P jeweils eine eigene Zielfunktion F aufstellen und minimieren. In Einzelfällen kann es jedoch möglich sein, dass die numerische Steuerung 11 durch das Minimieren der jeweiligen Zielfunktion F die Lagesollwerte lj für mehrere Bahnpunkte P ermittelt. In diesem Fall bilden die Bahnpunkte P, deren Lagesollwerte lj durch Minimieren der jeweiligen Zielfunktion F ermittelt werden, innerhalb der Sequenz von anzufahrenden Bahnpunkten P eine in sich zusammenhängende Gruppe, beispielsweise die Gruppe PG in FIG 3 oder die Gruppe PG' in FIG 4. Die in sich zusammenhängende Gruppe PG bzw. PG' von Bahnpunkten P enthält in diesem Fall den zukünftig anzufahrenden Bahnpunkt P3.

Beispielsweise kann es möglich sein, dass in an sich bekannter Weise die Sollbahn durch parametrisierbare Splines definiert ist und dass für die einzelnen Splines jeweils eine analytische Lösung der Zielfunktion F ermittelt werden kann. Alternativ kann mittels bekannter Optimierungsverfahren innerhalb der jeweiligen Gruppe PG bzw. PG' von Bahnpunkten P derjenige Bahnpunkt - in den FIG 3 und 4 mit P7 bezeichnet - ermittelt werden, der gemäß dem Optimierungskriterium der Zielfunktion F der kritischste Bahnpunkt ist. In diesem Fall kann die Minimierung der Zielfunktion F für den Bahnpunkt P7 erfolgen und - soweit es die Auflösung der Redundanzen betrifft - für die anderen Bahnpunkte P der entsprechenden Gruppe PG bzw. PG' übernommen werden.

Zusammengefasst betrifft die vorliegende Erfindung also folgenden Sachverhalt:
Eine numerische Steuerung 11 nimmt ein Anwenderprogramm 15 entgegen, das in einer Anzahl von Freiheitsgraden fi eine Sequenz von von einem Endeffektor 8 anzufahrenden Bahnpunkten P festlegt. Die numerische Steuerung 11 ermittelt für die Bahnpunkte P jeweils eine Steuersignalgruppe G, die für eine Anzahl von lagegeregelten Achsen 1 jeweils deren Lagesollwert lj enthält. Die numerische Steuerung 11 gibt die ermittelten Lagesollwerte lj an die Achsen 1 aus und bewegt dadurch den Endeffektor 8. Die Anzahl von Freiheitsgraden fi ist kleiner als die Anzahl von lagegeregelten Achsen 1. Die numerische Steuerung 11 ermittelt die Steuersignalgruppen G derart, dass der Endeffektor 8 die anzufahrenden Bahnpunkte P zumindest näherungsweise anfährt. Die numerische Steuerung 11 ermittelt die Steuersignalgruppen G sukzessiv während des Ansteuerns der lagegeregelten Achsen 1. Sie ermittelt die Lagesollwerte lj der Steuersignalgruppen G durch Minimieren einer jeweiligen Zielfunktion F. In die Zielfunktion F, die während des Anfahrens eines der Bahnpunkte P1 minimiert wird, gehen zumindest die Lagesollwerte lj für einen zu diesem Zeitpunkt erst zukünftig anzufahrenden Bahnpunkt P3 ein. Zwischen dem momentan angefahrenen Bahnpunkt P1 und dem zukünftig anzufahrenden Bahnpunkt P3 liegt mindestens ein weiterer Bahnpunkt P2 der Sequenz.

Die vorliegende Erfindung weist viele Vorteile auf. Insbesondere ist es auf relativ einfache und zuverlässige Weise möglich, in Echtzeit ein bahn- und orientierungstreues Verfahren des Endeffektors 8 zu gewährleisten, ohne alle lagegeregelten Achsen 1 der redundanten Bearbeitungsmaschine explizit programmieren zu müssen. Dennoch kann auf einfache Weise eine schnelle und exakte Bearbeitung des Werkstücks 10 erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für eine Bearbeitungsmaschine,
- wobei eine numerische Steuerung (11) ein Anwenderprogramm (15) entgegen nimmt, das in einer Anzahl von Freiheitsgraden (fi) eine Sequenz von von einem Endeffektor (8) anzufahrenden Bahnpunkten (P) festlegt,
- wobei die numerische Steuerung (11) für die Bahnpunkte (P) jeweils eine Steuersignalgruppe (G) ermittelt,
- wobei die jeweilige Steuersignalgruppe (G) für eine Anzahl von lagegeregelten Achsen (1) der Bearbeitungsmaschine jeweils deren Lagesollwert (lj) enthält,
- wobei die numerische Steuerung (11) die ermittelten Lagesollwerte (lj) an die Achsen (1) ausgibt und dadurch den Endeffektor (8) bewegt,
- wobei die Anzahl von Freiheitsgraden (fi) kleiner als die Anzahl von lagegeregelten Achsen (1) ist,
- wobei die numerische Steuerung (11) die Steuersignalgruppen (G) derart ermittelt, dass der Endeffektor (8) die anzufahrenden Bahnpunkte (P) zumindest näherungsweise anfährt,
- wobei die numerische Steuerung (11) die Steuersignalgruppen (G) sukzessiv während des Ansteuerns der lagegeregelten Achsen (1) ermittelt,
- wobei die numerische Steuerung (11) die Lagesollwerte (lj) der Steuersignalgruppen (G) durch Minimieren einer jeweiligen Zielfunktion (F) ermittelt,
- wobei in die Zielfunktion (F), die während des Anfahrens eines der Bahnpunkte (P1) minimiert wird, zumindest die Lagesollwerte (lj) für einen zu diesem Zeitpunkt erst zukünftig anzufahrenden Bahnpunkt (P3) eingehen und
- wobei zwischen dem momentan angefahrenen Bahnpunkt (P1) und dem zukünftig anzufahrenden Bahnpunkt (P3) mindestens ein weiterer Bahnpunkt (P2) der Sequenz liegt.

2. Steuerverfahren nach Anspruch 1,
**dadurch gekennzeichnet, dass** die numerische Steuerung (11) durch das Minimieren der jeweiligen Zielfunktion (F) jeweils die Lagesollwerte (lj) für den als nächstes anzufahrenden Bahnpunkt (P2) ermittelt.

3. Steuerverfahren nach Anspruch 2,
**dadurch gekennzeichnet, dass** in die jeweilige Zielfunktion (F) auch die Lagesollwerte (lj) derjenigen Bahnpunkte (P4) eingehen, die innerhalb der Sequenz von Bahnpunkten (P) zwischen dem zukünftig anzufahrenden Bahnpunkt (P3) und dem als nächstes anzufahrenden Bahnpunkt (P2) liegen.

4. Steuerverfahren nach Anspruch 1,
**dadurch gekennzeichnet, dass** die numerische Steuerung (11) durch das Minimieren der jeweiligen Zielfunktion (F) jeweils die Lagesollwerte (lj) für den zukünftig anzufahrenden Bahnpunkt (P3) ermittelt.

5. Steuerverfahren nach Anspruch 1,
**dadurch gekennzeichnet,**
- **dass** die numerische Steuerung (11) durch das Minimieren der jeweiligen Zielfunktion (F) die Lagesollwerte (lj) für mehrere Bahnpunkte (P) ermittelt,
- **dass** die Bahnpunkte (P), deren Lagesollwerte (lj) durch Minimieren der jeweiligen Zielfunktion (F) ermittelt werden, innerhalb der Sequenz von anzufahrenden Bahnpunkten (P) eine in sich zusammenhängende Gruppe (PG, PG') bilden und
- **dass** die in sich zusammenhängende Gruppe (PG, PG') den zukünftig anzufahrenden Bahnpunkt (P3) enthält.

6. Steuerverfahren nach einem der obigen Ansprüche,
**dadurch gekennzeichnet, dass** die Bahnpunkte (P) definierte, auf die Zeit oder auf die durch die Sequenz von Bahnpunkten (P) definierte Bahn bezogene Abstände (δt, δs) voneinander aufweisen.

7. Steuerverfahren nach einem der obigen Ansprüche,
**dadurch gekennzeichnet, dass** in die jeweilige Zielfunktion (F) auch zeitliche Ableitungen der in die jeweilige Zielfunktion (F) eingehenden Lagesollwerte (lj) eingehen.

8. Steuerverfahren nach einem der obigen Ansprüche,
**dadurch gekennzeichnet, dass** die Zielfunktion (F) derart bestimmt ist, dass sie die Steifigkeit des Endeffektors (8) berücksichtigt.

9. Steuerverfahren nach einem der obigen Ansprüche,
**dadurch gekennzeichnet, dass** in der Zielfunktion (F) Singularitäten und Softwarelimits berücksichtigt werden.

10. Steuerverfahren nach einem der obigen Ansprüche,
**dadurch gekennzeichnet, dass** in die Zielfunktion (F) Abweichungen einer sich aufgrund der Lagesollwerte (lj) ergebenden Istbahn von einer durch die Sequenz von Bahnpunkten (P) definierten Sollbahn eingehen.

11. Systemprogramm, das Maschinencode (13) umfasst, der von einer numerischen Steuerung (11) für eine Bearbeitungsmaschine abarbeitbar ist,
- wobei die Abarbeitung des Maschinencodes (13) durch die numerische Steuerung (11) bewirkt, dass die numerische Steuerung (11)
-- ein Anwenderprogramm (15) entgegen nimmt, das in einer Anzahl von Freiheitsgraden (fi) eine Sequenz von von einem Endeffektor (8) anzufahrenden Bahnpunkten (P) bestimmt,
-- für die Bahnpunkte (P) jeweils eine Steuersignalgruppe (G) ermittelt, die für eine Anzahl von lagegeregelten Achsen (1) der Bearbeitungsmaschine jeweils deren Lagesollwert (lj) enthält,
-- die ermittelten Lagesollwerte (lj) an die Achsen (1) ausgibt und dadurch den Endeffektor (8) bewegt,
-- die Steuersignalgruppen (G) derart ermittelt, dass der Endeffektor (8) die anzufahrenden Bahnpunkte (P) zumindest näherungsweise anfährt,
-- die Steuersignalgruppen (G) sukzessiv während des Ansteuerns der lagegeregelten Achsen (1) ermittelt und
-- die Lagesollwerte (lj) der Steuersignalgruppen (G) durch Minimieren einer jeweiligen Zielfunktion (F) ermittelt,
- wobei die Anzahl von Freiheitsgraden (fi) kleiner als die Anzahl von lagegeregelten Achsen (1) ist,
- wobei in die Zielfunktion (F), die während des Anfahrens eines der Bahnpunkte (P1) minimiert wird, zumindest die Lagesollwerte (lj) für einen zu diesem Zeitpunkt erst zukünftig anzufahrenden Bahnpunkt (P3) eingehen und
- wobei zwischen dem momentan angefahrenen Bahnpunkt (P1) und dem zukünftig anzufahrenden Bahnpunkt (P3) mindestens ein weiterer Bahnpunkt (P2) der Sequenz liegt.

12. Systemprogramm nach Anspruch 11,
**dadurch gekennzeichnet, dass** die numerische Steuerung (11) aufgrund des Abarbeitens des Maschinencodes (13) ein Steuerverfahren nach einem der Ansprüche 2 bis 10 realisiert.

13. Systemprogramm nach Anspruch 11 oder 12,
**dadurch gekennzeichnet, dass** es auf einem Datenträger (14) in maschinenlesbarer Form gespeichert ist.

14. Numerische Steuerung, wobei die numerische Steuerung mit einem Systemprogramm (12) nach Anspruch 11 oder 12 programmiert ist.

15. Bearbeitungsmaschine mit einem mittels einer Anzahl von lagegeregelten Achsen (1) bewegten Endeffektor (8) und einer numerischen Steuerung (11), wobei die numerische Steuerung (11) gemäß Anspruch 14 ausgebildet ist.

## Claims

1. Control method for an operating machine,
- wherein a numerical control device (11) accepts a user program (15) which determines a sequence of path points (P) to be approached by an end effector (8) in a number of degrees of freedom (fi),
- wherein the numerical control device (11) ascertains a control signal group (G) for each of the path points (P),
- wherein the respective control signal group (G) contains its respective position set point (lj) for a number of position-controlled axes (1) of the operating machine,
- wherein the numerical control device (11) outputs the ascertained position set point values (lj) to the axes (1) and moves the end effector (8) as a result,
- wherein the number of degrees of freedom (fi) is smaller than the number of position-controlled axes (1),
- wherein the numerical control device (11) ascertains the control signal groups (G) in such a way that the end effector (8) approaches the path points (P) to be approached at least approximately,
- wherein the numerical control device (11) ascertains the control signal groups (G) gradually during the activation of the position-controlled axes (1),
- wherein the numerical control device (11) ascertains the position set point values (lj) of the control signal groups (G) by minimising a respective objective function (F),
- wherein the objective function (F), which is minimised while approaching one of the path points (P1), includes at least the position set point values (lj) for a path point (P3) at this time only to be approached in the future and
- wherein there is at least one further path point (P2) of the sequence between the path point currently being approached (P1) and the path point to be approached in the future (P3).

2. Control method according to claim 1,
**characterised in that** the numerical control device (11) ascertains each of the position set point values (lj) for the path point (P2) to be approached next by minimising the respective objective function (F).

3. Control method according to claim 2,
**characterised in that** the respective objective function (F) also includes the position set point values (lj) of those path points (P4) which are within the sequence of path points (P) between the path point (P3) to be approached in the future and the path point (P2) to be approached next.

4. Control method according to claim 1,
**characterised in that** the numerical control device (11) ascertains each of the position set point values (lj) for the path point (P3) to be approached in the future by minimising the respective objective function (F).

5. Control method according to claim 1,
**characterised in that**
- the numerical control device (11) ascertains the position set point values (lj) for several path points (P) by minimising the respective objective function (F),
- the path points (P), the position set point values (lj) of which are ascertained by minimising the respective objective function (F), form a coherent group (PG, PG') within the sequence of path points (P) to be approached and
- the coherent group (PG, PG') contains the path point (P3) to be approached in the future.

6. Control method according to one of the preceding claims,
**characterised in that** the path points (P) are spaced at distances (δt, δs) from each other defined by time or by the path defined by the sequence of path points (P).

7. Control method according to one of the preceding claims,
**characterised in that** the respective objective function (F) also includes time derivatives of the position set point values (lj) included in the respective objective function (F).

8. Control method according to one of the preceding claims,
**characterised in that** the objective function (F) is determined such that it takes into account the rigidity of the end effector (8).

9. Control method according to one of the preceding claims,
**characterised in that** singularities and software limits are taken into account in the objective function (F).

10. Control method according to one of the preceding claims,
**characterised in that** the objective function (F) includes deviations of an actual path produced by the position set point values (lj) from a desired path defined by the sequence of path points (P).

11. System program comprising machine code (13) which can be executed by a numerical control device (11) for an operating machine,
- wherein the execution of the machine code (13) is effected by the numerical control device (11) so that the numerical control device (11)
-- accepts a user program (15) which determines a sequence of path points (P) to be approached by an end effector (8) in a number of degrees of freedom (fi),
-- ascertains a control signal group (G) for each of the path points (P) which contains its position set point value (lj) for each of a number of position-controlled axes (1) of the operating machine,
-- outputs the ascertained position set point values (lj) to the axes (1) and moves the end effector (8) as a result,
-- ascertains the control signal groups (G) in such a way that the end effector (8) approaches the path points (P) to be approached at least approximately,
-- ascertains the control signal groups (G) gradually during the activation of the position-controlled axes (1) and
-- ascertains the position set point values (lj) of the control signal groups (G) by minimising a respective objective function (F),
- wherein the number of degrees of freedom (fi) is smaller than the number of position-controlled axes (1),
- wherein the objective function (F), which is minimised while approaching one of the path points (P1), includes at least the position set point values (lj) for a path point (P3) at this time only to be approached in the future and
- wherein there is at least one further path point (P2) of the sequence between the currently approached path point (P1) and the path point (P3) to be approached in the future.

12. System program according to claim 11,
**characterised in that** the numerical control device (11) realises a control method according to one of claims 2 to 10 on account of the execution of the machine code (13).

13. System program according to claim 11 or 12,
**characterised in that** it is stored in machine-readable form on a data medium (14).

14. Numerical control device, wherein the numerical control device is programmed using a system program (12) according to claim 11 or 12.

15. Operating machine with an end effector (8) moved by means of a number of position-controlled axes (1) and a numerical control device (11), wherein the numerical control device (11) is embodied according to claim 14.

## Revendications

1. Procédé de commande d'une machine d'usinage,
- dans lequel une commande ( 11 ) numérique reçoit un programme ( 15 ) utilisateur, qui fixe, dans un certain nombre de degrés ( fi ) de liberté, une séquence de points ( P ) de trajectoire, par lesquels doit passer un effecteur ( 8 ) final,
- dans lequel la commande ( 11 ) numérique détermine, pour les points ( P ) de la trajectoire, respectivement un groupe ( G ) de signaux de commande,
- dans lequel le groupe ( G ) de signal de commande contient, pour un certain nombre d'axes ( 1 ) régulés en position de la machine d'usinage, respectivement leurs valeurs ( lj ) de consigne de position,
- dans lequel la commande ( 11 ) numérique émet les valeurs ( lj ) de consigne de position déterminées sur les axes ( 1 ) et déplace ainsi l'effecteur ( 8 ) final,
- dans lequel le nombre de degrés ( fi ) de liberté est plus petit que le nombre d'axes ( 1 ) régulés en position,
- dans lequel la commande ( 11 ) numérique détermine les groupes ( G ) de signaux de commande, de manière à ce que l'effecteur ( 8 ) final passe, au moins à peu près, par les points ( P ) de la trajectoire où il doit passer,
- dans lequel la commande ( 11 ) numérique détermine les groupes ( G ) de signaux de commande successivement pendant la commande des axes ( 1 ) régulés en position,
- dans lequel la commande ( 11 ) numérique détermine les valeurs ( lj ) de consigne de position des groupes ( G ) de signaux de commande en minimisant une fonction ( F ) cible respective,
- dans lequel il entre dans la fonction ( F ) cible, qui est minimisée pendant le passage à l'un des points ( P1 ) de la trajectoire, au moins les valeurs ( lj ) de consigne de position pour un point ( P3 ) de trajectoire à passer à cet instant seulement ultérieurement et
- dans lequel, entre le point ( P1 ) de la trajectoire, où l'on passe instantanément, et le point ( P3 ) de la trajectoire, où l'on passera ultérieurement, il y a au moins un autre point ( P2 ) de trajectoire de la séquence.

2. Procédé de commande suivant la revendication 1,
**caractérisé en ce que** la commande ( 11 ) numérique détermine, en minimisant la fonction ( F ) cible respective, respectivement les valeurs ( lj ) de consigne de position pour le point ( P2 ) de trajectoire à passer en premier ensuite.

3. Procédé de commande suivant la revendication 2,
**caractérisé en ce que**, dans la fonction ( F ) cible, entrent aussi les valeurs ( lj ) de consigne de position des points ( P4 ) de la trajectoire, qui se trouvent dans la séquence de points ( P ) de la trajectoire entre le point ( P3 ) de la trajectoire, où l'on doit passer ultérieurement, et le point ( P2 ) de la trajectoire à passer en premier ensuite.

4. Procédé de commande suivant la revendication 1,
**caractérisé en ce que** la commande ( 11 ) numérique détermine, en minimisant la fonction ( F ) cible, les valeurs ( lj ) de consigne de position du point ( P3 ) de la trajectoire où l'on doit passer ultérieurement.

5. Procédé de commande suivant la revendication 1,
**caractérisé**
- **en ce que** la commande ( 11 ) numérique détermine, en minimisant la fonction ( F ) cible, les valeurs ( lj ) de consigne de position pour plusieurs points ( P ) de la trajectoire,
- **en ce que** les points ( P ) de la trajectoire, dont les valeurs ( lj ) de consigne de position sont déterminées en minimisant la fonction ( F ) cible, forment, à l'intérieur de la séquence de points ( P ) de la trajectoire, où il faut passer, un groupe ( PG, PG' ) en soi enchaîné et
- **en ce que** le groupe ( PG, PG' ) en soi enchaîné contient le point ( P3 ) de la trajectoire, où l'on doit passer ultérieurement.

6. Procédé de commande suivant l'une des revendications précédentes,
**caractérisé en ce que** les points ( P ) de la trajectoire ont entre eux des distances (δt, δs) définies rapportées au temps ou à la trajectoire définie par la séquence de points ( P ) de la trajectoire.

7. Procédé de commande suivant l'une des revendications précédentes,
**caractérisé en ce qu'**il entre dans la fonction ( F ) cible également des dérivés en fonction du temps des valeurs ( lj ) de consigne de position entrant dans la fonction ( F ) cible.

8. Procédé de commande suivant l'une des revendications précédentes,
**caractérisé en ce que** la fonction ( F ) cible est déterminée, de manière à prendre en compte la rigidité de l'effecteur ( 8 ) final.

9. Procédé de commande suivant l'une des revendications précédentes,
**caractérisé en ce que** l'on prend en compte des singularités et des limites de logiciel dans la fonction ( F ) cible.

10. Procédé de commande suivant l'une des revendications précédentes,
**caractérisé en ce qu'**il entre dans la fonction ( F ) cible des écarts d'une trajectoire réelle donnée sur la base des valeurs ( lj ) de consigne de position à une trajectoire de consigne définie par la séquence de points ( P ) de la trajectoire.

11. Programme de système, qui comprend un code ( 13 ) machine, lequel peut être exploité par une commande ( 11 ) numérique de la machine d'usinage,
- dans lequel l'exploitation du code ( 13 ) machine, par la commande ( 11 ) numérique, fait que la commande ( 11 ) numérique
-- reçoit un programme ( 15 ) d'utilisateur, qui définit, dans un certain nombre de degrés ( fi ) de liberté, une séquence de points ( P ) de trajectoire, par lesquels un effecteur ( 8 ) final doit passer,
-- détermine, pour les points ( P ) de la trajectoire, respectivement un groupe ( G ) de signaux de commande, qui contient, pour un certain nombres d'axes ( 1 ) régulés en position de la machine d'usinage, respectivement leurs valeurs ( lj ) de consigne de position,
-- émet les valeurs ( lj ) de consigne de position déterminées sur les axes ( 1 ) et déplace ainsi l'effecteur ( 8 ) final,
-- détermine les groupes ( G ) de signaux de commande, de manière à ce que l'effecteur ( 8 ) final passe, au moins à peu près, par les points ( P ) de la trajectoire où il doit passer,
-- détermine des groupes ( G ) de signaux de commande successivement pendant la commande des axes ( 1 ) régulés en position,
-- détermine des valeurs ( lj ) de consigne de position des groupes ( G ) de signaux de commande en minimisant une fonction ( F ) cible,
- dans lequel le nombre des degrés ( fi ) de liberté est plus petit que le nombre des axes ( 1 ) régulés en position,
- dans lequel il entre dans la fonction ( F ) cible, qui est minimisée pendant le passage par un point ( P1 ) de la trajectoire, au moins des valeurs ( lj ) de consigne de position pour un point ( P3 ) de la trajectoire, sur lequel il faut à cet instant passer seulement ultérieurement et
- dans lequel, entre le point ( P1 ) de trajectoire, sur lequel on passe instantanément, et le point ( P3 ) de la trajectoire, auquel on doit passer ultérieurement, il y a au moins un autre point ( P2 ) de trajectoire de la séquence.

12. Programme de système suivant la revendication 11, **caractérisé en ce que** la commande ( 11 ) numérique réalise sur la base de l'exploitation du code ( 13 ) machine un procédé de commande suivant l'une des revendications 2 à 10.

13. Programme de système suivant la revendication 11 ou 12, **caractérisé en ce qu'**il est mémorisé sous forme déchiffrable par un ordinateur sur un support de données.

14. Commande numérique, la commande numérique étant programmée par un programme ( 12 ) de système suivant la revendication 11 ou 12.

15. Machine d'usinage comprenant un effecteur ( 8 ) final déplacé au moyen d'un certain d'axes ( 1 ) régulés en position et une commande numérique, la commande ( 11 ) numérique est donc constituée suivant la revendication 14.
